# EUROPÄISCHE PATENTSCHRIFT

(11) **EP 1 478 830 B1**
(45) Veröffentlichungstag und Bekanntmachung des Hinweises auf die Patenterteilung: **09.11.2005**
(21) Anmeldenummer: 03706285.8
(22) Anmeldetag: 06.02.2003
(51) Int. Cl.: F01N 3/00, F01N 3/22, F02D 41/04, F02M 23/08

(54) **VERFAHREN UND VORRICHTUNG ZUM BETREIBEN EINES VERBRENNUNGSMOTORS**
METHOD AND DEVICE FOR OPERATING AN INTERNAL COMBUSTION ENGINE
PROCEDE ET DISPOSITIF POUR FAIRE FONCTIONNER UN MOTEUR A COMBUSTION INTERNE

(30) Priorität: 14.02.2002 DE 10205969; 01.08.2002 DE 10235194
(43) Veröffentlichungstag der Anmeldung: 24.11.2004
(73) Patentinhaber: ROBERT BOSCH GMBH, 70442 Stuttgart (DE)
(72) Erfinder: RIES-MUELLER, Klaus, 74906 Bad Rappenau (DE); BAEUERLE, Michael, 71254 Ditzingen-Heimerdingen (DE); BLUMENSTOCK, Andreas, 71638 Ludwigsburg (DE)
(86) Internationale Anmeldenummer: PCT/DE2003/000331
(87) Internationale Veröffentlichungsnummer: WO 2003/069135

(56) Entgegenhaltungen:
- DE-C- 19 608 060
- DE-C- 19 705 421
- DE-C- 19 735 455
- US-A- 4 257 227
- US-B1- 6 293 236

## Beschreibung

### Stand der Technik

Die Erfindung betrifft ein Verfahren zum Betreiben eines Verbrennungsmotors.

Ein Verfahren und eine Vorrichtung zum Betreiben eines Verbrennungsmotors ist bereits aus der DE 44 00 536 C2 bekannt. Nach dem bekannten Verfahren wird im Betrieb des Verbrennungsmotors Sekundärluft in das Abgasleitungssystem eingeleitet und kühlt dort den Hochtemperaturabschnitt eines Katalysators sowie einen Schalldämpferkörper. Moderne Katalysatoren erreichen bei hoher Motorlast (Volllast) Temperaturen um die 1000°C. Wird das Fahrzeug kurz nach einem solchen Volllastbetrieb abgestellt, kann die Außenwandtemperatur des Katalysators schnell einige 100°C erreichen. Es kommt gewissermaßen zu einem Hitzestau, da bei einem Stillstand des Fahrzeugs die Kühlung durch den Fahrtwind fehlt.

Ein Anhalten des Fahrzeugs mit laufendem Motor nach einem Volllastbetrieb ist dagegen weniger kritisch, da dann das vergleichsweise kühle Abgas des Verbrennungsmotors, das im Leerlaufbetrieb eine Temperatur von ca. 300°C bis 400°C besitzt, überschüssige Wärme von dem heißeren Katalysator wegführen kann, so dass der Katalysator durch das Abgas gekühlt würde. Der Hitzestau im Fahrzeugstillstand mit abgestelltem Motor kann die Katalysatorwand so weit aufheizen, dass beispielsweise eine trockene Wiese, auf der das Fahrzeug möglicherweise steht, entzündet wird. Manche Fahrzeughersteller steuern eine Warnlampe im Fahrzeugcockpit an, falls die Gefahr einer Entzündung der Wiese durch die Abstrahlung von Hitze durch den Katalysator, der die Gefahr eines Fahrzeugbrandes mit sich bringt, besteht. Der Fahrer kann dann das Fahrzeug auf einen anderen Abstellplatz bewegen oder den Verbrennungsmotor noch einige Zeit im Leerlauf laufen lassen, um den Katalysator zu kühlen.

Es ist weiterhin bekannt, dass ein Fahrzeug auch nach dem Abstellen noch Schadstoffe emittiert. Unter anderem entweichen geringe Mengen an Kohlenwasserstoffen (HC) aus dem Saugrohr in die Umgebung. Quellen für solche HC-Emissionen sind beispielsweise eine Kurbelgehäuseentlüftung oder Rückstände an einem Einspritzventil oder eine Tankentlüftung.

Diese Emissionen müssen zukünftig aufgrund verschärfter Abgasgrenzwerte unterbleiben.

Vor diesem Hintergrund besteht die Aufgabe der Erfindung in der Angabe eines Verfahrens, das einerseits die Gefahr eines Fahrzeugbrandes ohne die genannten Maßnahmen verringert und andererseits die HC-Emissionen nach Abstellen des Verbrennungsmotors verhindert.

Diese Aufgabe wird bei einem Verfahren der eingangs genannten Art dadurch gelöst, dass die Luft bei abgestelltem Verbrennungsmotor in den Ansaugbereich des Verbrennungsmotors geleitet wird.

Dabei wird vorausgesetzt, dass die Luft bei gleichzeitig offenem Einlassventil und Auslassventil wenigstens eines Zylinders oder Brennraums des Verbrennungsmotors durch den Verbrennungsmotor hindurch in das Abgasleitungssystem geleitet wird.

Dieses Verfahren ist besonders vorteilhaft bei einer Vorrichtung verwendbar, die einen elektrischen Turbolader aufweist. Üblicherweise besitzen Verbrennungsmotoren kein Gebläse, das Luft in den Ansaugbereich fördern könnte. Dies ist jedoch bei Verbrennungsmotoren mit elektrischen Hilfsturboladern anders. Allgemein ermöglichen Turbolader unabhängig vom Motorkonzept, d. h. sowohl beim Dieselmotor als auch beim Benzinmotor (Ottomotor) mit Saugrohreinspritzung oder Direkteinspritzung vielseitige Vorteile. Beispiele solcher Vorteile sind eine Verbrauchseinsparung und eine Leistungssteigerung. Nachteilig wirkt sich bei den heute üblichen Abgasturboladern aber die fehlende Spontanität im unteren Drehzahlbereich aus. Motoren mit Abgasturbolader reagieren verzögert auf eine Momentenanforderung, da zunächst Druck im Abgassystem aufgebaut werden muss, um den Turbolader auf Drehzahl zu bringen und damit eine zur Drehmomentsteigerung erforderliche Förderung von Luft in den Ansaugbereich zu erzielen. Zur Verringerung dieses verzögerten Ansprechens kann ein zusätzlicher elektrischer Turbolader eingesetzt werden. Darunter versteht man ein zusätzlich zum Abgasturbolader vorhandenes, elektrisch betriebenes Luftgebläse, das mit dem Abgasturbolader gewissermaßen in Reihe geschaltet ist. Je nach Betriebspunkt kann dieses Gebläse mittels eines Bypasses umgangen werden. Ein solcher elektrischer Turbolader zur Unterstützung eines üblichen Abgasturboladers ist beispielsweise aus der EP 107 08 37 bekannt.

Der besondere Vorteil der Erfindung liegt nun darin, diesen gegebenenfalls ohnehin vorhandenen elektrischen Turbolader zur Verringerung der Brandgefahr durch einen beim Abstellen eines Fahrzeugs heißen Katalysator und zur Verhinderung der HC-Emissionen nach dem Abstellen des Verbrennungsmotors zu verwenden. Erfindungsgemäß wird der elektrische Turbolader dazu verwendet, Luft in den Ansaugbereich des Verbrennungsmotors zu leiten, wobei diese Luft bei abgestelltem Verbrennungsmotor und offenen Gaswechselventilen des Verbrennungsmotors durch den Verbrennungsmotor hindurch in das Abgasleitungssystem und damit in bzw. durch den Katalysator geleitet wird. Es ergibt sich aus der vorliegenden Darstellung, daß die Erfindung nicht auf die Verwendung eines elektrischen Turboladers beschränkt ist, sondern daß jedes Gebläse, das im Stillstand des Verbrennungsmotors Luft in den Ansaugbereich des Verbrennungsmotors fördern kann, im Rahmen der Erfindung verwendet werden kann.

Eine Ausgestaltung des Verfahrens zeichnet sich dadurch aus, dass in zeitlichem Zusammenhang mit dem Abstellen des Verbrennungsmotors ein Maß für eine Temperatur im Abgasleitungssystem gebildet wird, dass dieses Maß mit einem Schwellenwert verglichen wird und dass die Luft in den Ansaugbereich des Verbrennungsmotor eingeleitet wird, wenn das Maß den Schwellenwert überschreitet.

Eine weitere Ausgestaltung zeichnet sich dadurch aus, dass das Maß für eine Temperatur im Abgasleitungssystem auf der Basis einer im Abgasleitungssystem gemessenen Größe gebildet wird.

Eine weitere Ausgestaltung sieht vor, dass das Maß für eine Temperatur im Abgasleitungssystem auf der Basis eines Temperaturmodells für eine Temperatur im Abgasleitungssystem gebildet wird.

Eine weitere Ausgestaltung sieht vor, dass das Maß für eine Temperatur im Abgasleitungssystem auch nach dem Beginn der Einleitung von Luft gebildet wird und dass die Einleitung von Luft solange aufrechterhalten wird, bis das genannte Maß einen weiteren Schwellenwert unterschreitet.

Eine dazu zusätzliche oder alternative Maßnahme sieht vor, dass die Lufteinblasung für eine vorbestimmte Zeitdauer erfolgt.

Eine dazu zusätzliche oder alternative Maßnahme sieht vor, dass die Einleitung von Luft aufrechterhalten wird, bis eine Temperatur des Verbrennungsmotors einen weiteren Schwellenwert unterschreitet.
Bei einer weiteren Ausgestaltung werden wenigstens ein Einlassventil und ein Auslassventil in wenigstens einem Zylinder (Brennraum) des Verbrennungsmotors gleichzeitig geöffnet. Bei einem Verbrennungsmotor, bei dem die Einlassventile und Auslassventile mit Nockenwellen betätigt werden, kann die Nockenwelle durch eine entsprechende Ansteuerung des Anlassers in eine entsprechende Position gebracht werden. Bei einem Verbrennungsmotor mit vollvariabler Ventilsteuerung kann dies direkt durch eine Betätigung der Ventilaktuatoren geschehen, ohne dass dazu der Anlasser betätigt werden muss.

Eine weitere Maßnahme sieht vor, dass bei einem Verbrennungsmotor, dessen Brennraumfüllung über einen variablen Hub der Einlassventile gesteuert wird, ein den minimalen Ventilhub übersteigender Ventilhub eingestellt wird.
Besonders vorteilhaft ist die Erfindung auch, wenn der Brennraum durch die Luftströmung gekühlt und zusätzlich mit kühlerer Luft gefüllt wird. Dies führt insbersondere bei einem nachfolgenden Direktstart (Start ohne Anlasser) zu einem besseren Startverhalten.

Dabei ist es denkbar, dass die Luftströmung während des Auslaufens des Motors (nach Zündung aus) erzeugt wird. Das heißt, während der Motor seine Drehzahl auf 0 U/min verringt. Dies hat den Vorteil, dass das noch im Zylinder befindliche Restgas ausgeblasen wird.
Ebenso kann die Luftströmung nach dem Abstellen des Motors (Motordrehzahl gleich 0 U/min) erfolgen.

Die Erfindung richtet sich auch auf eine Vorrichtung zur Durchführung wenigstens eines der Verfahren nach den vorhergehenden Ansprüchen, wobei ein elektrischer Turbolader zur Einleitung der Luft verwendet wird.

Die Erfindung richtet sich auch auf eine elektronische Steuereinrichtung zur Durchführung wenigstens eines der oben genannten Verfahren oder einer der Ausgestaltungen.

Im Folgenden werden Ausführungsbeispiele der Erfindung mit Bezug auf die Erfindung näher erläutert.

Figur 1 zeigt ein erstes Ausführungsbeispiel einer erfindungsgemäßen Vorrichtung zusammen mit dem technischen Umfeld der Erfindung.

Figur 2 zeigt ein Ausführungsbeispiel des erfindungsgemäßen Verfahrens zur Aktivierung der Einleitung von Luft.

Die Figuren 3 und 4 zeigen verschiedene Ausführungsbeispiele erfindungsgemäßer Verfahren mit Alternativen zur Deaktivierung der Einleitung von Luft.

Figur 5 zeigt ein Ausführungsbeispiel, dass die Verwendung der Erfindung bei Verbrennungsmotoren mit niedrigen Zylinderzahlen und mit durch Nockenwellen gesteuerten Gaswechselventilen (Einlassventile, Auslassventile) erlaubt.

Figur 6 zeigt ein weiteres Ausführungsbeispiel der Erfindung in einem geänderten technischen Umfeld, das sich durch eine variable Ventilsteuerung auszeichnet.

Figur 7 zeigt ein weiteres Ausführungsbeispiel der Erfindung ausgehend von dem Ausführungsbeispiel nach Figur 6, wobei es bei diesem Ausführungsbeispiel um die Verhinderung der HC-Emissionen nach dem Abstellen des Verbrennungsmotors geht.

Figur 8 zeigt einenAblaufplan zur Verdeutlichung des erfindungsgemäßen Verfahrens im Hinblick auf die Verhinderung der HC-Emissionen.

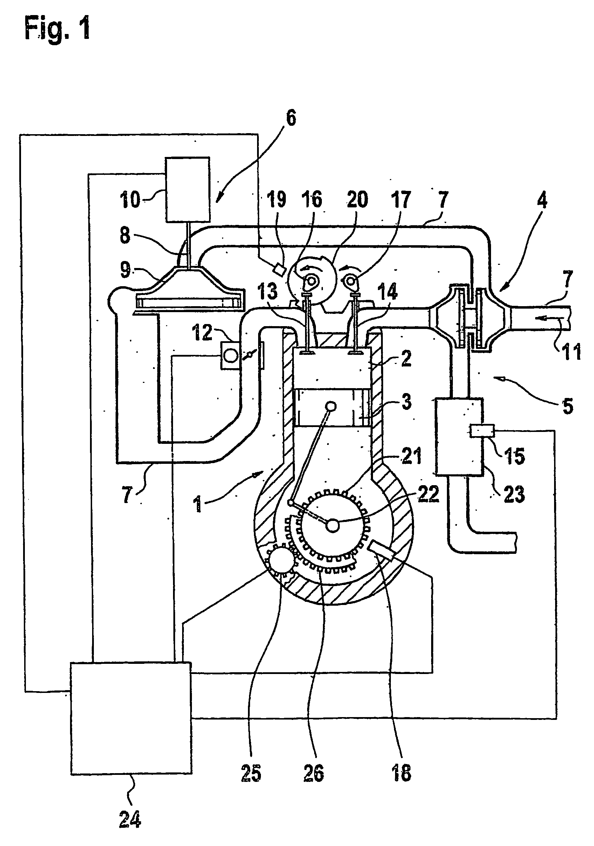

Die 1 in der Figur 1 bezeichnet einen Verbrennungsmotor mit einem Brennraum 2 oberhalb eines Kolbens 3 und einem Abgasturbolader 4 in einem Abgasleitungssystem 5 sowie mit einem Mittel 6 zum Einleiten von Luft in den Ansaugbereich 7 des Verbrennungsmotors. Das Mittel 6 ist vorzugsweise ein elektrischer Turbolader, der ergänzend zur Unterstützung eines üblichen Abgasturboladers 4 verwendet wird.

Die Erfindung ist aber nicht auf die Verwendung eines elektrischen Turboladers in Verbindung mit einem herkömmlichen Abgasturbolader beschränkt. Wesentlich ist vielmehr, dass ein Gebläse im Ansaugbereich im Stillstand des Verbrennungsmotors Luft in den Ansaugbereich fördert. Der elektrische Turbolader 6 weist ein Förderrad 9 auf, das über eine Welle 8 von einem Elektromotor 10 angetrieben wird. Im angetriebenen Zustand fördert das Förderrad 9 Luft in den Ansaugbereich 7.

Der mit der Ziffer 11 bezeichnete Pfeil repräsentiert die Strömungsrichtung von in den Ansaugbereich 7 einströmender Luft. Die geförderte Luft wird über eine Drosselklappeneinrichtung 12 und offenstehende Einlassventile 13 und Auslassventile 14 durch den Brennraum 2 in das Abgasleitungssystem 5 geleitet. Die Luft strömt durch eine Abgasvorrichtung 23, vorzugsweise ein Katalysator und transportiert überschüssige Wärme von der Abgasvorrichtung zur Umgebung. Diese Kühlung schützt die Abgasvorrichtung 13 im Stillstand des Verbrennungsmotors, wenn die Kühlwirkung durch kühleres Abgas wegfällt, vor einem Hitzestau. Ein Steuergerät 24, beispielsweise eine elektronische Steuereinrichtung, steuert die erfindungsgemäße Kühlung der Abgasvorrichtung im Stillstand des Verbrennungsmotors. Dazu kann dem Steuergerät 24 das Signal einer Abgassonde 15 zugeführt werden, aus dem das Steuergerät 14 ein Maß für die Temperatur der Abgasvorrichtung bildet. Die Abgassonde 15 ist vorzugsweise vor oder in der Abgasvorrichtung 23 angeordnet.

Bei der Sonde 15 kann es sich um einen Temperaturfühler handeln. Alternativ kann es sich auch um eine Abgassonde zur Erfassung der Konzentration eines Abgasbestandteils im Abgas handeln, deren Signal Rückschlüsse auf die Temperatur erlaubt. Beispielsweise kann der Innenwiderstand einer herkömmlichen Lambdasonde zur Bestimmung der Temperatur verwendet werden.

Abhängig von dem gebildeten Maß für die Temperatur steuert das Steuergerät 24 im Stillstand des Verbrennungsmotors den Elektromotor 10 an. In der Darstellung der Figur 1 werden das Einlassventil 13 und das Auslassventil 14 von einer Nockenwelle 16 und einer Nockenwelle 17 betätigt. Im dargestellten Zustand sind beide Ventile geöffnet, wobei das Einlassventil 13 schon offen und das Auslassventil 14 noch offen ist. Dieser auch als Ventilüberschneidung bezeichnete Zustand tritt beim Viertaktmotor beim Übergang vom Ausstoßtakt, mit dem die verbrannten Gase aus dem Brennraum in das Abgasleitungssystem 5 ausgestoßen werden, zu dem Ansaugtakt, in dem frische Luft oder frisches Gemisch aus dem Ansaugbereich 7 in den Brennraum gesaugt wird, auf. Bei Verbrennungsmotoren mit einer großen Zahl von Zylindern kann davon ausgegangen werden, dass zu jedem Zeitpunkt eine Ventilüberschneidung in irgendeinem der Zylinder vorliegt. In diesem Fall ist zu jedem Zeitpunkt ein Transport von Frischluft aus dem Ansaugbereich 7 durch den Brennraum 2 in den Abgasleitungsbereich möglich. Bei Verbrennungsmotoren mit niedrigen Zylinderzahlen (kleiner oder gleich 4) kann es vorkommen, dass eine Ventilüberschneidung in einer bestimmten Stellung der Kurbelwelle und der Nockenwelle des Verbrennungsmotors im Stillstand in keinem der Zylinder auftritt. Dieser Zustand kann mit Hilfe von Winkelsensoren an der Kurbelwelle und der Nockenwelle detektiert werden. Ein Induktivaufnehmer 19 an der Nockenwelle 16 oder 17 liefert in Verbindung mit einem Nockenwellengeberrad 20 eine Information darüber, ob ein bestimmter Zylinder des Verbrennungsmotors bzw. dessen Kolben sich in der ersten Hälfte (Ansaugen/Verdichten) oder in der zweiten Hälfte (Verbrennen/Ausstoßen) eines Arbeitszyklusses befindet.

Ein weiterer Induktivgeber 18 liefert zusammen mit einer vergleichsweise feinstufigen Folge von ferromagnetischen Markierungen 21 eines Kurbelwellengeberrades 22 eine Information über die Stellung des Kolbens und der Nockenwellen innerhalb der jeweiligen Hälfte des Arbeitszyklusses. Da die Drehwinkel der Kurbelwelle und der Nockenwellen, bei denen eine Ventilüberschneidung auftritt, bekannt sind, kann durch die Auswertung der Signale der Induktivgeber 18 und 19 beurteilt werden, ob eine Ventilüberschneidung vorliegt. Wenn dies nicht der Fall ist und das erfindungsgemäße Verfahren durchgeführt werden soll, kann das Steuergerät 24 einen Anlasser 25 aktivieren, der über einen als Segment 26 dargestellten Zahnkranz, der mit der Kurbelwelle drehfest verbunden ist, die Kurbelwelle so weit dreht, dass eine Ventilüberschneidung auftritt. Nur der Vollständigkeit halber sei erwähnt, dass eine Drehung der Kurbelwelle natürlich auch eine Drehung der Nockenwellen bewirkt, da diese Wellen beispielsweise durch Zahnriemen, Ketten oder Zahnräder phasensynchron miteinander verbunden sind.

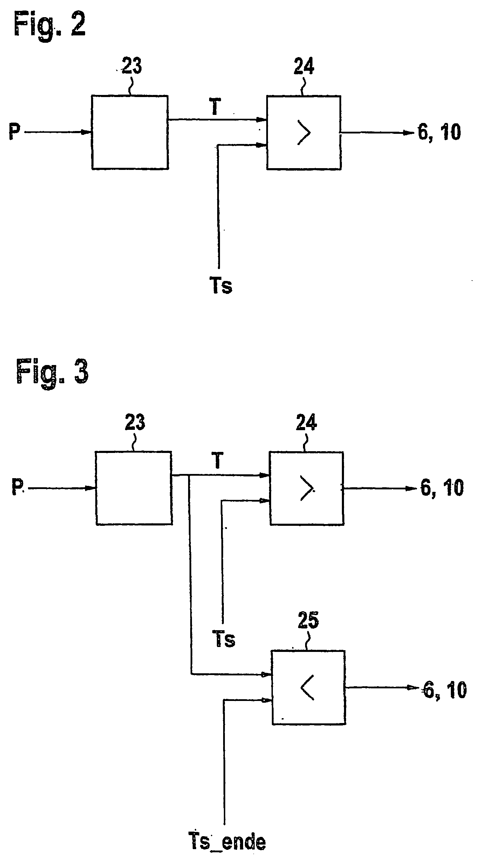

Figur 2 zeigt ein Ausführungsbeispiel des erfindungsgemäßen Verfahrens in der Form von Funktionsblöcken. Dem Block 23 werden Parameter P des Verbrennungsmotors oder des Abgasleitungssystems zugeführt, um daraus ein Maß T für eine Temperatur im Abgasleitungssystem zu bilden. P kann hier beispielsweise stellvertretend für das Signal.der Sonde 15 stehen. P kann aber auch ein Ensemble von Betriebsparametern des Verbrennungsmotors wie Ansaugluftmenge, Drehzahl, Ansauglufttemperatur etc. repräsentieren, aus denen im Block 23 mit Hilfe eines Temperaturmodells ein Maß für die Temperatur T im Abgasleitungssystem gebildet wird. Abgas- und Katalysatortemperaturmodelle sind dem Fachmann beispielsweise aus der US 5 590 521 bekannt, so dass sie hier keiner weiteren Erläuterung bedürfen. Das im Block 23 gebildete Maß T für die Temperatur im Abgasleitungssystem wird in einem Block 24 mit einem vorbestimmten Schwellenwert Ts verglichen. Wenn T größer als Ts ist, erfolgt eine Aktivierung des elektrischen Abgasturboladers 6 bzw. seines Elektromotors 10. Die Funktionsblöcke der Figur 2 sind, wie auch die Funktionsblöcke der Figuren 3 bis 5, durch Softwaremodule und Hardwarekomponenten, wie Endstufen, im Steuergerät 14 realisiert.

Figur 3 zeigt eine weitere Ausgestaltung des erfindungsgemäßen Verfahrens. Zusätzlich zu der in der Figur 2 dargestellten Struktur weist die Figur 3 einen weiteren Block 25 auf, in dem die Temperatur T bzw. das Maß T für die Temperatur im Abgasleitungssystem mit einem weiteren Schwellenwert Ts_Ende verglichen wird. Die Funktion dieses Vergleichs im Block 25 besteht darin, dass dann, wenn die Temperatur T den Schwellenwert Ts_Ende unterschreitet, der elektrische Turbolader 6 bzw. dessen Elektromotor 10 wieder deaktiviert werden. Selbstverständlich ist Ts_Ende kleiner als der Schwellenwert Ts.

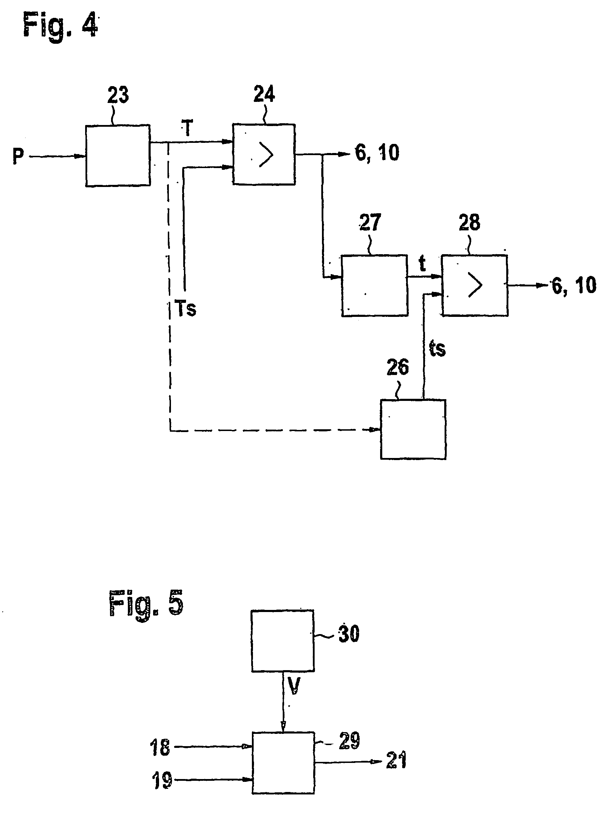

Ein weiteres Beispiel einer Deaktivierung des Einleitens von Luft in den Ansaugbereich 7 ist in der Figur 4 dargestellt. Danach wird die Temperatur T bzw. das Maß T für eine Temperatur im Abgasleitungsbereich nicht nur dem Block 24, sondern parallel dazu auch einem Block 26 zugeführt. Abhängig von dem Wert T bestimmt Block 26 einen Schwellenwert ts, der dem Block 28 zugeführt wird und der eine Solleinschaltdauer des elektrischen Turboladers repräsentiert. Das Ausgangssignal des Blocks 24, das den elektrischen Turbolader aktiviert, wird parallel einem Block 27 zugeführt und löst dort einen Zählvorgang aus. Das Ergebnis dieses Zählvorgangs wird als Zeitvariable t dem Block 28 zugeführt, in dem es mit dem Schwellenwert ts verglichen wird. Sobald t größer als ts wird, deaktiviert Block 28 den elektrischen Abgasturbolader 6 bzw. dessen Elektromotor 10 und beendet damit die Einleitung von Luft in den Ansaugbereich 7 des Verbrennungsmotors 1. Dies entspricht einer Zeitsteuerung der Luftzufuhr, wobei die Zeitspanne der Luftzuführung fest vorgegeben sein kann oder, wie hier dargestellt, vom Wert der Temperatur T abhängig vorgegeben werden kann. Vorteilhft ist z.B. eine Verlängerung der Zeitspanne mit Luftzufuhr mit wachsenden Werten der Temperatur T.

Figur 5 repräsentiert ein Programmmodul, mit dem das Steuergerät 14 gegebenenfalls den Anlasser 21 ansteuert, um eine Ventilüberschneidung zu erzeugen. Dazu werden einem Block 29 die Signale der Induktivgeber 18 und 19 der Kurbelwelle und der Nockenwelle zugeführt. Weiter werden dem Block 29 Vergleichsparameter V aus einem Block 30, beispielsweise einem Speicher, zugeführt, beispielsweise diejenigen bekannten Winkelstellungen, bei denen eine Ventilüberschneidung vorliegt. Wenn die aus den Signalen der Induktivgeber 18 und 19 berechneten Ist-Winkelstellungen der Kurbelwelle und der Nockenwellen von den bekannten Soll-Winkelstellungen der Kurbelwelle und der Nockenwelle, bei denen eine Ventilüberschneidung auftritt, abweichen, steuert Block 29 den Anlasser 21 an, um durch eine Drehung der Kurbelwelle und der mit der Kurbelwelle drehsynchron gekoppelten Nockenwellen eine Ventilüberschneidung zu erzeugen.

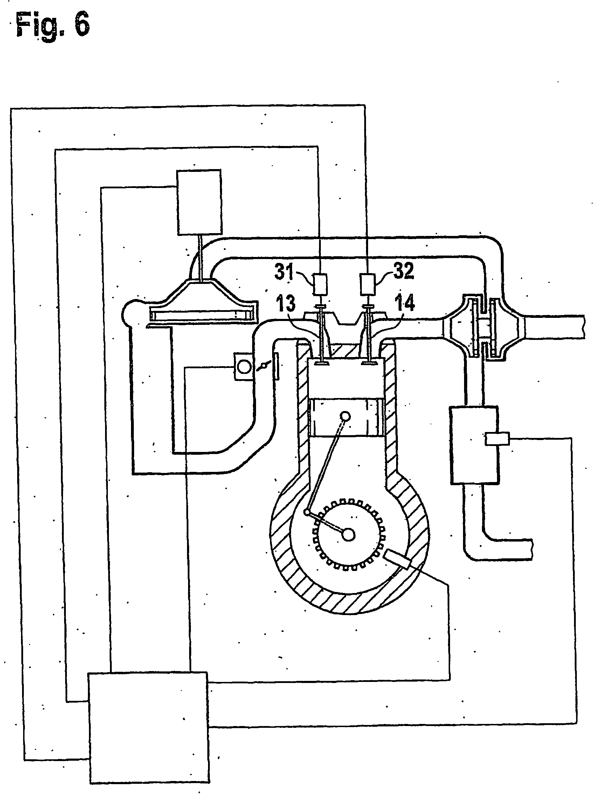

Figur 6 zeigt eine Abwandlung eines technischen Umfeldes, in dem die Erfindung angewendet werden kann. Die Abwandlung besteht darin, dass die Einlassventile 13 und die Auslassventile 14 nicht durch Nockenwellen, sondern beispielsweise durch elektrohydraulische Aktuatoren 31 und 32 betätigt werden. In diesem Fall können die Ventile 13 und 14 unabhängig von der Stellung der Kurbelwelle und des Kolbens im Stillstand des Verbrennungsmotors geöffnet werden, um eine Luftströmung vom Ansaugbereich 7 in den Abgasleitungsbereich 5 des Verbrennungsmotors 1 zu ermöglichen. Eine solche vollvariable Ventilsteuerung ist beispielsweise aus der US 4 009 695 bekannt.

Weiter ist eine sogenannte drosselfreie Laststeuerung aus der DE 195 01 386 (US 5 588 411) bekannt. Eine solche drosselfreie Laststeuerung zeichnet sich dadurch aus, dass zumindest die Einlassventile mit einem variablen Hub geöffnet werden können. Bei Anforderung hoher Drehmomente wird mit einem großen Hub gearbeitet um eine große Brennraumfüllung zu erzielen und bei Anforderung kleiner Drehmomente, beispielsweise im Leerlauf des Verbrennungsmotors, wird mit einem sehr kleinen Ventilhub gearbeitet, um eine kleine Brennraumfüllung zu erzielen. Bei einem solchen System wird der Ventilhub der Einlassventile beim Einleiten von Frischluft in den Ansaugbereich 7 des Verbrennungsmotors 1 vorzugsweise weiter geöffnet, als es dem Minimalhub entspricht, um den Strömungswiderstand des Verbrennungsmotors zu verringern. Vorzugsweise werden die Einlassventile in diesem Fall maximal geöffnet.

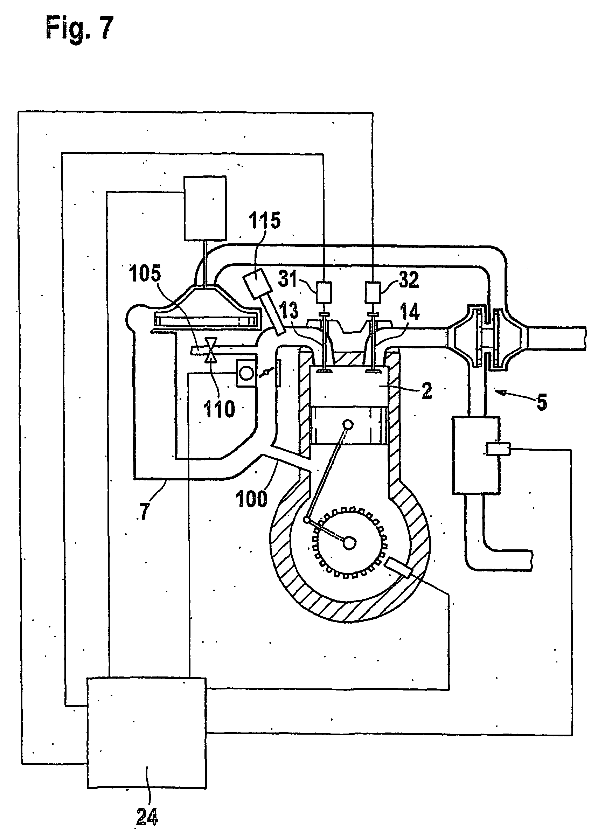

Ein weiteres Ausführungsbeispiel der Erfindung ist ausgehend von Figur 6 in Figur 7 dargestellt. Dabei kennzeichnen gleiche Bezugszeichen gleiche Elemente. Zusätzlich zu der Ausgestaltung nach Figur 6 ist in Figur 7 eine Kurbelgehäuseentlüftung 100, eine Tankentlüftung 105 mit einem Tankentlüftungsventil 110 und ein Einspritzventil 115 dargestellt. Das Einspritzventil 115 ist dabei im Ansaugbereich 7 des Verbrennungsmotors angeordnet, so dass es sich um eine Saugrohreinspritzung handelt. Alternativ kann die Einspritzung auch direkt in den Brennraum 2 erfolgen. Die Tankentlüftung 105 und die Kurbelgehäuseentlüftung 100 erfolgen ebenfalls in den Ansaugbereich 7.

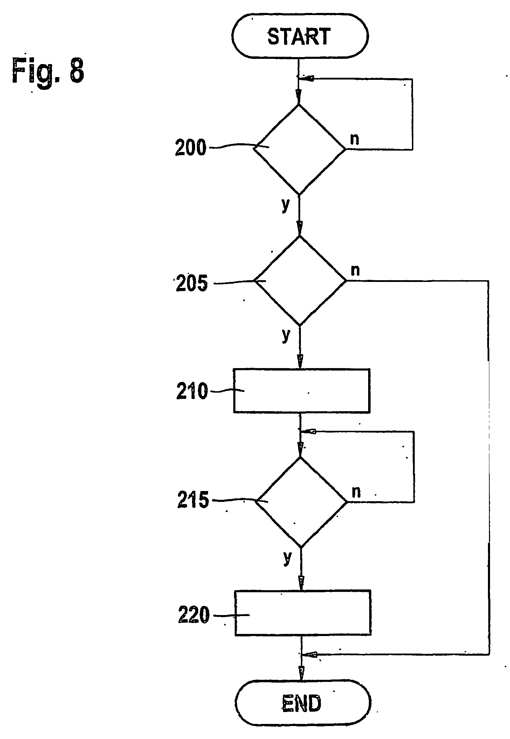

Der Ablauf des erfindungsgemäßen Verfahrens im Hinblick auf die Verhinderung der HC-Emissionen ist im Ablaufplan nach Figur 8 beispielhaft dargestellt. Das Programm ist dabei beispielsweise im Steuergerät 24 implementiert. Nach dem Starten des Programms wird bei einem Programmpunkt 200 geprüft, ob der Verbrennungsmotor 1 ausgeschaltet wurde und sich im Stillstand befindet. Ist dies der Fall, so wird zu einem Programmpunkt 205 verzweigt, andernfalls wird zu Programmpunkt 200 zurückverzweigt. Dazu kann ein in den Figuren nicht dargestellter Drehzahlsensor verwendet werden, der die Drehzahl des Verbrennungsmotors erfaßt und an das Steuergerät 24 weitergibt. Ist die erfaßte Drehzahl gleich Null, so detektiert das Steuergerät den Stillstand des Verbrennungsmotors 1, andernfalls läuft der Verbrennungsmotor 1 noch.

Bei Programmpunkt 205 prüft das Steuergerät 24 anhand der gemessenen oder modellierten Katalysatortemeperatur, ob die Katalysatortemperatur größer als der vorbestimmte Schwellenwert Ts ist. Ist dies der Fall, so wird zu einem Programmpunkt 210 verzweigt, andernfalls wird das Programm verlassen und die Katalysatortemperatur als nicht ausreichend zur vollständigen Verbrennung der HC-Rückstände bzw. -Emissionen betrachtet. Der vorbestimmte Schwellenwert Ts kann beispielsweise zu 300°C gewählt werden. Dabei sei davon ausgegangen, dass die Abgasvorrichtung 23 als Katalysator ausgebildet ist.

Hintergrund ist der Gedanke, daß das Abgasreinigungssystem, in diesem Beispiel der Katalysator 23, aktiv sein muß, um die HC-Emissionen zu konvertieren. Deshalb können auch andere Inidizien, die darauf schließen lassen, daß das Abgasreinigungssystem betriebsbereit ist, verwendet werden. Dies kann z.B. auch eine Motortemperatur, eine zurückgelegte Fahrstrecke oder eine Betriebszeit des Motors seit dem letzten Start sein.

Bei Programmpunkt 210 veranlaßt das Steuergerät 24 ein Einschalten bzw. eine getaktete Ansteuerung des Elektromotors 10 mit minimaler Drehzahl. Dabei werden die Ventile 13 und 14 in der zu Figur 6 beschriebenen Weise geöffnet, um die Luftströmung vom Ansaugbereich 7 über den Verbrennungsmotor 1 in den Abgasleitungsbereich 5 zu ermöglichen. Liegt keine solche vollvariable Ventilsteuerung vor, sondern werden die Ventile 13 und 14 mittels der Nockenwellen 16 und 17 gemäß Figur 1 betätigt, so muß in der zu Figur 1 beschriebenen Weise sichergestellt werden, dass eine Ventilüberschneidung vorliegt, um die gewünschte Luftströmung vom Ansaugbereich 7 zum Abgasleitungsbereich 5 zu ermöglichen.

Anschließend wird zu einem Programmpunkt 215 verzweigt.

Bei Programmpunkt 215 prüft das Steuergerät 24, ob eine Motortemperatur des Verbrennungsmotors 1 einen vorgegebenen Schwellwert Tm unterschreitet. Der vorgegebene Schwellwert kann beispielsweise 10°C betragen. Zusätzlich oder alternativ kann das Steuergerät 24 prüfen, ob die gemessene oder modellierte Katalysatortemperatur den weiteren Schwellenwert Ts_Ende unterschreitet. Der weitere Schwellenwert Ts_Ende kann beispielsweise zu 250°C gewählt werden. Zusätzlich oder alternativ kann das Steuergerät 24 prüfen, ob die seit dem Einschalten des Elektromotors 10 verstrichene Zeit den Schwellenwert ts überschreitet. Ist eine der genannten drei Bedingungen erfüllt, so wird zu einem Programmpunkt 220 vezweigt, andernfalls wird zu Programmpunkt 215 zurückverzweigt.

Kühlt der Verbrennungsmotor 1 unter den vorgegebenen Schwellwert Tm ab oder kühlt der Katalysator 23 unter den weiteren Schwellenwert Ts_Ende ab, so wird davon ausgegangen, dass eine weitere Verbrennung von HC-Rückständen im Katalysator 23 nicht mehr möglich ist. Hingegen ist der Schwellwert ts für die abgelaufene Zeit seit Aktivierung des Elektromotors 10 so zu wählen, dass eine möglichst vollständige Verbrennung der HC-Rückstände gewährleistet ist.

Bei Programmpunkt 220 veranlaßt das Steuergerät 24 ein Ausschaltet des Elektromotors 24 und damit ein Beenden der Luftströmung vom Ansaugbereich 7 über den Verbrennungsmotor 1 zum Abgasleitungsbereich 5. Eine weitere Verbrennung von HC-Rückständen wird somit verhindert.

Anschließend wird das Programm verlassen. Das Programm kann für jeden aktivierten Verbrennungsmotor neu gestartet werden.

Die HC-Emissionen sind nach dem Abstellen des Verbrennungsmotors 1 am größten, zumal wenn der Verbrennungsmotor 1 noch warm ist. Dies liegt unter anderem an der Kurbelgehäuseentlüftung 100. Wird nun mit Hilfe des Elektromotors 10 und damit des elektrischen Turboladers 6 ein leichter Luftstrom erzeugt, so werden die HC-Emissionen Richtung Abgasleitungssystem 5 transportiert und im Katalysator 23 umgesetzt. Einige Minuten nach Aktivierung des elektrischen Turboladers 6 sind auf diese Weise die HC-Emissionen aus dem Ansaugbereich 7 entfernt und der elektrische Turbolader 6 kann nach Ablauf des Schwellenwertes ts wieder ausgeschaltet werden.

Somit wird ein Entweichen der HC-Emissionen nach Abschalten des Verbrennungsmotors 1 in die Umgebung weitgehend verhindert.

## Patentansprüche

1. Verfahren zum Betreiben eines Verbrennungsmotors, **dadurch gekennzeichnet, dass** nach dem Abstellen des Verbrennungsmotors im Stillstand des Verbrennungsmotors eine Luftströmung von einem Ansaugbereich durch den Verbrennungsmotor in einen Abgasleitungsbereich des Verbrennungsmotors erzeugt wird.

2. Verfahren nach Anspruch 1, **gekennzeichnet durch** die Schritte:
- Bilden eines Maßes für eine Temperatur im Abgasleitungssystem,
- Vergleichen des Maßes mit einem Schwellenwert,
- Einleiten von Luft in den Ansaugbereich des Verbrennungsmotors, wenn das Maß für die Temperatur im Abgasleitungssystem den Schwellenwert überschreitet.

3. Verfahren nach Anspruch 1 oder 2, **dadurch gekennzeichnet, dass** das Maß für eine Temperatur im Abgasleitungssystem auf der Basis einer im Abgasleitungssystem gemessenen Größe erfolgt.

4. Verfahren nach Anspruch 1 oder 2, **dadurch gekennzeichnet, dass** das Maß für eine Temperatur im Abgasleitungssystem auf der Basis eines Temperaturmodells für eine Temperatur im Abgasleitungssystem gebildet wird.

5. Verfahren nach einem der vorhergehenden Ansprüche, **dadurch gekennzeichnet, dass** das Maß für eine Temperatur im Abgasleitungssystem auch nach dem Beginn der Einleitung von Luft gebildet wird und dass die Einleitung von Luft aufrechterhalten wird, bis das Maß einen weiteren Schwellenwert unterschreitet.

6. Verfahren nach einem der vorhergehenden Ansprüche, **dadurch gekennzeichnet, dass** die Einleitung von Luft für eine vorbestimmte Zeitdauer erfolgt.

7. Verfahren nach einem der vorhergehenden Ansprüche, **dadurch gekennzeichnet, dass** die Einleitung von Luft aufrechterhalten wird, bis eine Temperatur des Verbrennungsmotors einen weiteren Schwellenwert unterschreitet.

8. Verfahren nach einem der vorhergehenden Ansprüche, **dadurch gekennzeichnet, dass** bei einem Verbrennungsmotor, bei dem Einlassventile und Auslossventile mit Nockenwellen betätigt werden, die Einlassventile und Auslassventile wenigstens eines Zylinders in eine Stellung gebracht werden, bei der wenigstens ein Einlassventil und ein Austassventil eines Brennraums des Verbrennungsmotors gleichzeitig geöffnet sind.

9. Verfahren nach einem der vorhergehenden Ansprüche, **dadurch gekennzeichnet, dass** bei einem Verbrennungsmotor, dessen Brennraumfüllung über einen variablen Hub der Einlassventile gesteuert wird, ein den minimalen Ventilhub übersteigender Ventilhub eingestellt wird.

10. Verfahren nach einem der vorhergehenden Ansprüche, **dadurch gekennzeichnet, dass** bei einem Verbrennungsmotor mit vollvariabler Ventilsteuerung wenigstens ein Einlassventil und wenigstens ein Auslassventil wenigstens eines Brennraums gleichzeitig geöffnet werden.

11. Verfahren nach einem der vorherigen Anspruche, **gekennzeichnet durch** die Schritte:
- Bilden eines Maßes für eine Betriebsbereitschaft eines Abgasteinigungssystems, insbesondere eine Katalysatortemperatur, eine Motortemperatur, eine zurückgelegte Fahrstrecke oder eine Betriebszeit des Motors seit dem letzten Start,
- Vergleichen des Maßes mit einem Schwellenwert,
- Einleiten von Luft in den Ansaugbereich des Verbrennungsmotors, wenn das Maß für die Betriebsbereitschaft den Schwellenwert überschreitet.

12. Vorrichtung zur Durchführung wenigstens eines der Verfahren nach den vorhergehenden Ansprüchen, **dadurch gekennzeichnet, dass** ein elektrischer Turbolader zur Einleitung der Luft verwendet wird.

13. Steuereinrichtung zur Durchführung wenigstens eines der Verfahren nach den Ansprüchen 1 bis 11 mit Mitteln (24), die veranlassen, nach dem Abstellen des Verbrennungsmotors im Stillstand des Verbrennungsmotors, Luft in den Ansaugbereich des Verbrennungsmotors zu leiten.

14. Verfahren nach einem der vorhergehenden Ansprüche, **dadurch gekennzeichnet, dass** nach der Durchleitung von Luft ein Direktstart erfolgt.

## Claims

1. Method for operating an internal combustion engine, **characterized in that** after the internal combustion engine has been switched off, when the internal combustion engine is stationary, a flow of air is generated from an intake region through the internal combustion engine into an exhaust pipe region of the internal combustion engine.

2. Method according to Claim 1, **characterized by** the steps of :
- forming a measurement of a temperature in the exhaust pipe system,
- comparing the measurement with a threshold value,
- introducing air into the intake region of the internal combustion engine if the measurement of the temperature in the exhaust pipe system exceeds the threshold value.

3. Method according to Claim 1 or 2, **characterized in that** the measurement of a temperature in the exhaust pipe system is based on a variable measured in the exhaust pipe system.

4. Method according to Claim 1 or 2, **characterized in that** the measurement of a temperature in the exhaust pipe system is based on a temperature model for a temperature in the exhaust pipe system.

5. Method according to one of the preceding claims, **characterized in that** the measurement of a temperature in the exhaust pipe system is formed even after the introduction of air has commenced, and **in that** the introduction of air is maintained until the measurement drops below a further threshold value.

6. Method according to one of the preceding claims, **characterized in that** the air is introduced for a predetermined period of time.

7. Method according to one of the preceding claims, **characterized in that** the introduction of air is maintained until a temperature of the internal combustion engine drops below a further threshold value.

8. Method according to one of the preceding claims, **characterized in that** in an internal combustion engine, in which intake valves and exhaust valves are actuated by camshafts, the intake valves and exhaust valves of at least one cylinder are moved into a position in which at least one intake valve and one exhaust valve of a combustion chamber of the internal combustion engine are simultaneously open.

9. Method according to one of the preceding claims, **characterized in that** a valve lift which exceeds the minimum valve lift is set for an internal combustion engine whereof the combustion chamber filling is controlled by means of a variable lift of the intake valves.

10. Method according to one of the preceding claims, **characterized in that** at least one intake valve and at least one exhaust valve of at least one combustion chamber are opened simultaneously in an internal combustion engine with completely variable valve control.

11. Method according to one of the preceding claims, **characterized by** the steps of:
- forming a measurement of the operational readiness of an exhaust purification system, in particular a catalytic converter temperature, an engine temperature, a travel distance covered or an operating time of the engine since it was last started,
- comparing the measurement with a threshold value,
- introducing air into the intake region of the internal combustion engine if the measurement of the operational readiness exceeds the threshold value.

12. Apparatus for carrying out at least one of the methods according to the preceding claims, **characterized in that** an electrical turbocharger is used to introduce the air.

13. Control device for carrying out at least one of the methods according to Claims 1 to 11, having means (24) which cause air to be passed into the intake region of the internal combustion engine after the internal combustion engine has been turned off, with the internal combustion engine stationary.

14. Method according to one of the preceding claims, **characterized in that** a direct start takes place after the air has been passed through.

## Revendications

1. Procédé de gestion d'un moteur à combustion interne,
**caractérisé en ce qu'**
après la coupure du moteur à combustion interne, à l'état de repos du moteur, on génère un écoulement d'air à travers le moteur à combustion interne entre sa zone d'admission et sa zone d'échappement.

2. Procédé selon la revendication 1,
**caractérisé en ce qu'**
- on forme une mesure de la température dans le système de conduite des gaz d'échappement ;
- on compare cette mesure à un seuil ;
- on introduit de l'air dans la zone d'admission du moteur à combustion interne si la mesure de la température dans le système à conduite des gaz d'échappement dépasse le seuil.

3. Procédé selon la revendication 1 ou 2,
**caractérisé en ce que**
la mesure de la température dans le système de conduite des gaz d'échappement se fait sur la base d'une grandeur mesurée dans le système de conduite des gaz d'échappement.

4. Procédé selon la revendication 1 ou 2,
**caractérisé en ce qu'**
on forme la mesure de la température dans le système de conduite des gaz d'échappement sur la base d'un modèle de température correspondant à une température dans le système de conduite des gaz d'échappement.

5. Procédé selon l'une des revendications précédentes,
**caractérisé en ce qu'**
- on forme la mesure d'une température dans le système de conduite de gaz d'échappement également après le début de l'introduction d'air ; et
- on maintient l'introduction d'air jusqu'à ce que la mesure passe en dessous d'un autre seuil.

6. Procédé selon l'une des revendications précédentes,
**caractérisé en ce qu'**
on introduit de l'air pendant une durée prédéfinie.

7. Procédé selon l'une des revendications précédentes,
**caractérisé en ce qu'**
on maintient l'introduction de l'air jusqu'à ce que la température dans le moteur à combustion interne passe en dessous d'un autre seuil.

8. Procédé selon l'une des revendications précédentes,
**caractérisé en ce que**
dans un moteur à combustion interne dont les soupapes d'admission et d'échappement sont commandées par un arbre à came, on place les soupapes d'admission et d'échappement d'au moins un cylindre dans une position correspondant à l'ouverture simultanée d'au moins une soupape d'admission et d'au moins une soupape d'échappement d'une chambre de combustion du moteur à combustion interne.

9. Procédé selon l'une des revendications précédentes,
**caractérisé en ce que**
pour un moteur à combustion interne dont la charge de la chambre de combustion est commandée par une course variable des soupapes d'admission, on règle une course de soupape dépassant la course minimale.

10. Procédé selon l'une des revendications précédentes,
**caractérisé en ce que**
dans un moteur à combustion interne à commande de soupape totalement variable on ouvre simultanément au moins une soupape d'admission et au moins une soupape d'échappement d'au moins une chambre de combustion.

11. Procédé selon l'une des revendications précédentes,
**caractérisé en ce qu'**
- on forme une mesure indiquant qu'un système de nettoyage des gaz d'échappement est prêt à fonctionner notamment une température de catalyseur, une température de moteur, un trajet parcouru ou un temps de fonctionnement du moteur depuis le dernier démarrage ;
- on compare la mesure à un seuil ;
- on introduit de l'air dans la zone d'admission du moteur à combustion interne si la mesure correspondant à l'aptitude prêt à fonctionner dépasse le seuil.

12. Dispositif pour la mise en oeuvre d'au moins un procédé selon l'une des revendications précédentes,
**caractérisé en ce qu'**
il comporte un turbocompresseur électrique pour introduire l'air.

13. Installation de commande pour la mise en oeuvre d'au moins un procédé selon l'une des revendications 1 à 11, comportant des moyens qui après la coupure du moteur à combustion interne et lorsque le moteur à combustion interne est à l'arrêt, font passer de l'air dans la zone d'admission du moteur à combustion interne.

14. Procédé selon l'une des revendications 1 à 11,
**caractérisé par**
un démarrage direct après le passage de l'air.
